(19) Europäisches Patentamt
European Patent Office
Office européen des brevets

(11) **EP 4 318 677 A1**

(12) **EUROPEAN PATENT APPLICATION**
published in accordance with Art. 153(4) EPC

(43) Date of publication:
**07.02.2024 Bulletin 2024/06**

(21) Application number: **22937663.7**

(22) Date of filing: **13.05.2022**

(51) International Patent Classification (IPC):
**H01M 4/62** (2006.01)    **H01M 10/0525** (2010.01)

(86) International application number:
**PCT/CN2022/092598**

(87) International publication number:
**WO 2023/216209 (16.11.2023 Gazette 2023/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Ningde City, Fujian 352100 (CN)**

(72) Inventors:
• **YUN, Liang**
**Ningde, Fujian 352100 (CN)**

• **SUN, Xin**
**Ningde, Fujian 352100 (CN)**
• **WU, Lili**
**Ningde, Fujian 352100 (CN)**
• **SONG, Peidong**
**Ningde, Fujian 352100 (CN)**
• **DONG, Miaomiao**
**Ningde, Fujian 352100 (CN)**

(74) Representative: **Gong, Jinping**
**CocreateIP**
**Neumarkterstr. 21**
**81673 München (DE)**

(54) **PORE-FORMING AGENT FOR SECONDARY BATTERY, PREPARATION METHOD FOR PORE-FORMING AGENT, NEGATIVE ELECTRODE SHEET, ELECTRODE ASSEMBLY, AND SECONDARY BATTERY**

(57)    This application provides a pore-forming agent for secondary battery and a preparation method thereof, a negative electrode plate, an electrode assembly, and a secondary battery. The pore-forming agent for secondary battery includes a one-dimensional conductive material and stable-state lithium metal particles, where the stable-state lithium metal particles are loaded on the one-dimensional conductive material.

FIG. 1

**Description**

**TECHNICAL FIELD**

This application relates to the field of secondary batteries and specifically to a pore-forming agent for secondary battery and a preparation method thereof, a negative electrode plate, an electrode assembly, and a secondary battery.

**BACKGROUND**

Lithium-ion batteries, such as secondary batteries, with their advantages in high energy density, good cycling performance, high average output voltage, and the like, have been widely used as power sources in electric apparatuses. With the development of electric vehicles, large energy storage devices, and other fields, higher requirements are imposed on energy density of secondary batteries. Higher energy density is achieved by increasing coating weights of electrode plates, but this extends transport paths of lithium ions and leads to deterioration in electrochemical performance of secondary batteries. Electrolyte infiltration and lithium ion transport of electrode plates can be improved by pore formation in the electrode plates, however, conventional manners such as mechanical pore forming and solvent pore forming feature a poor pore-forming effect.

**SUMMARY**

In view of the foregoing problems, this application provides a pore-forming agent for secondary battery which can improve the pore-forming effect of electrode plates and a preparation method thereof, a negative electrode plate, an electrode assembly, a secondary battery, a battery module, a battery pack, and an electric apparatus.

According to a first aspect, this application provides a pore-forming agent for secondary battery including a one-dimensional conductive material and stable-state lithium metal particles, where the stable-state lithium metal particles are loaded on the one-dimensional conductive material.

In the pore-forming agent for secondary battery, the stable-state lithium metal particles are loaded on the one-dimensional conductive material, so that a conductive network can be formed covering the one-dimensional conductive material for preparation of negative electrode plate. When a battery is assembled and injected with an electrolyte, lithium metal in the pore-forming agent can be intercalated into a negative electrode active material to implement in-situ pore formation and pre-lithiation. As compared with conventional pore-forming means, the above pore-forming agent for secondary battery can implement in-situ non-destructive pore formation, and the pores obtained are relatively large and less likely to collapse or close, thus improving electrolyte infiltration of a negative electrode plate, reducing battery polarization, and facilitating preparation of negative electrode plate with higher energy density. In addition, because the lithium metal can be intercalated into the negative electrode active material for simultaneous pre-lithiation, the energy density of the negative electrode plate can be further improved.

In some embodiments, the stable-state lithium metal particles are lithium metal particles with a coating layer.

Optionally, a substance of the coating layer is selected from at least one of conductive polymers and lithium carbonate.

Coated with the coating layer, the stable-state lithium metal particles have good chemical stability, and before electrolyte injection, the lithium metal is less prone to oxidation reactions, resulting in high usable capacity.

In some embodiments, the one-dimensional conductive material includes at least one of conductive carbon fiber and organic conductive fiber.

In some embodiments, the conductive carbon fiber includes at least one of carbon nanotubes and carbon fiber.

In some embodiments, the organic conductive fiber is selected from fibers containing at least one of polyaniline, polythiophene, polypyrrole, and polyacetylene.

The above one-dimensional conductive material has high conductivity and can form a conductive network in the negative electrode plate as an ingredient of the pore-forming agent, ensuring good electrical conductivity of the negative electrode plate and avoiding deterioration in electrochemical performance of the negative electrode plate.

In some embodiments, mass ratio of the one-dimensional conductive material to the stable-state lithium metal particles is (3-10): 1;

optionally, the mass ratio of the one-dimensional conductive material to the stable-state lithium metal particles is (4-9): 1; and

optionally, the mass ratio of the one-dimensional conductive material to the stable-state lithium metal particles is (5-8): 1.

The mass ratio of the one-dimensional conductive material to the stable-state lithium metal particles is controlled within the above ranges so that the negative electrode plate or secondary battery including the above pore-forming agent has higher energy density and better cycling stability.

In some embodiments, in the pore-forming agent for secondary battery, the one-dimensional conductive material forms a conductive network structure;

optionally, the conductive network structure is a layer structure, a cage structure, or a woven structure; and
optionally, the conductive network structure is a cage structure.

The one-dimensional conductive material forming a conductive network structure can guarantee electrical conductivity of the negative electrode plate using the above pore-forming agent and avoid deterioration in the electrochemical performance of the negative electrode plate.

In some embodiments, a median particle size by volume $D_v50$ of the pore-forming agent for secondary battery is 10 $\mu$m-250 $\mu$m;

optionally, $D_v50$ of the pore-forming agent for secondary battery is 20 $\mu$m-200 $\mu$m; and
optionally, $D_v50$ of the pore-forming agent for secondary battery is 30 $\mu$m-80 $\mu$m.

According to a second aspect, this application further provides a preparation method of pore-forming agent for secondary battery including the following step:

loading stable-state lithium metal particles on a one-dimensional conductive material to prepare a pore-forming agent for secondary battery.

The above preparation method of pore-forming agent for secondary battery features simple operation and low costs and facilitates easy implementation of mass production, and the prepared pore-forming agent for secondary battery is used for preparation of negative electrode plate so as to implement in-situ pore formation, improving electrolyte infiltration and lithium ion transport of the negative electrode plate, and used in secondary batteries to improve energy density, direct current impedance, and cycling stability of the secondary batteries.

In some embodiments, the step of loading stable-state lithium metal particles on a one-dimensional conductive material is performed through spray drying.

According to a third aspect, this application further provides a negative electrode plate including a current collector and a negative electrode active substance layer, where the negative electrode active substance layer is disposed on at least one surface of the current collector; and the negative electrode active substance layer includes the foregoing pore-forming agent for secondary battery or the pore-forming agent for secondary battery prepared using the foregoing preparation method of pore-forming agent for secondary battery.

In some embodiments, mass percentage of the pore-forming agent for secondary battery in the negative electrode active substance layer is 0.1%-15%;

optionally, the mass percentage of the pore-forming agent for secondary battery in the negative electrode active substance layer is 1%-10%; and
optionally, the mass percentage of the pore-forming agent for secondary battery in the negative electrode active substance layer is 2%-5%.

The percentage of the pore-forming agent in the negative electrode active substance layer is controlled within the above ranges so that the negative electrode plate has more suitable porosity and the negative electrode plate exhibits good electrolyte infiltration and lithium ion transport performance.

According to a fourth aspect, this application further provides an electrode assembly including:

a positive electrode plate, a separator, and the foregoing negative electrode plate that are stacked.

According to a fifth aspect, this application further provides a secondary battery including a positive electrode plate, a separator, and a negative electrode plate that are stacked, the electrolyte being disposed between the positive electrode plate and the negative electrode plate; where

the negative electrode plate includes a current collector and a negative electrode active substance layer, where the negative electrode active substance layer is disposed on at least one surface of the current collector; the negative electrode active substance layer includes a negative electrode active material and a one-dimensional conductive material, the negative electrode active material being intercalated with lithium; and the negative electrode active substance layer has a pore structure, at least part of the pore structure being formed by the one-dimensional conductive material.

According to a sixth aspect, this application further provides a battery module including the foregoing secondary battery.

According to a seventh aspect, this application further provides a battery pack including the foregoing battery module.

According to an eighth aspect, this application further provides an electric apparatus including at least one of the foregoing secondary battery, battery module, and battery pack.

The details of one or more embodiments of this application are set forth in the accompanying drawings and description below. Other features, purposes, and advantages of this application will become apparent from the specification, the accompanying drawings, and the claims.

## BRIEF DESCRIPTION OF DRAWINGS

Persons of ordinary skill in the art can clearly understand various other advantages and benefits by reading the detailed description of the optional embodiments below. The accompanying drawings are merely intended to illustrate the optional embodiments and are not intended to limit this application. Moreover, throughout the accompanying drawings, like reference signs denote like components. In the accompanying drawings:

FIG. 1 is a schematic diagram of a secondary battery according to an embodiment of this application.
FIG. 2 is an exploded view of the secondary battery according to the embodiment of this application in FIG. 1.
FIG. 3 is a schematic diagram of a battery module according to an embodiment of this application.
FIG. 4 is a schematic diagram of a battery pack according to an embodiment of this application.
FIG. 5 is an exploded view of the battery pack according to the embodiment of this application in FIG. 4.
FIG. 6 is a schematic diagram of an electric apparatus using a secondary battery as a power source according to an embodiment of this application.

Description of reference signs:

1. battery pack; 2. upper box body; 3. lower box body; 4. battery module; 5. secondary battery; 51. housing; 52. electrode assembly; and 53. cover plate.

Reference may be made to one or more of the accompanying drawings for the purpose of better describing and illustrating those embodiments or examples of the invention disclosed herein. The additional details or examples used to describe the accompanying drawings should not be considered limitations on the scope of any one of the disclosed invention, the currently described embodiments and/or examples, and the best mode of the invention as currently understood.

## DESCRIPTION OF EMBODIMENTS

For ease of understanding this application, the following describes this application more comprehensively with reference to the related accompanying drawings. The accompanying drawings provide preferred embodiments of this application. However, this application can be implemented in many different forms and is not limited to the embodiments described herein. On the contrary, these embodiments are provided for ease of a more thorough and comprehensive understanding of the disclosed content of this application.

Unless otherwise defined, all technical and scientific terms used herein shall have the same meanings as commonly understood by those skilled in the art to which this application pertains. The terms used herein in the specification of this application are for description of specific embodiments only without any intention to limit this application. The term "and/or" used herein includes any and all combinations of one or more associated items listed.

In conventional technologies, higher energy density is generally achieved by increasing coating weights of electrode plates, however, while increasing coating weights of electrode plates can increase capacity and energy density of secondary batteries, it also affects electrolyte infiltration of the electrode plates and extends transport path of lithium ions, thus increasing impedance of the electrode plates, and leading to deterioration in the electrochemical performance of the secondary batteries.

To alleviate the above problems, pore formation for electrode plates is generally performed for increasing porosity of the electrode plates, so as to reduce internal resistance of the electrode plates. However, conventional manners such as mechanical pore forming cause significant loss of active materials; and pore structures obtained by volatilization or decomposition of pore-forming agent features poor stability and residues thereof may affect electrical performance.

This application provides a pore-forming agent for secondary battery and a preparation method thereof, and a negative electrode plate, electrode assembly, secondary battery, battery module, battery pack, and electric apparatus using such pore-forming agent. The pore-forming agent for secondary battery can implement in-situ pore formation in negative electrode plates with better pore-forming effect and can increase energy density and cycling performance of secondary batteries. Such secondary battery is applicable to various electric apparatuses that use batteries, for example, mobile phones, portable devices, notebook computers, electric bicycles, electric toys, electric tools, electric vehicles, ships, and spacecrafts. For example, spacecrafts include airplanes, rockets, space shuttles, and spaceships.

An embodiment of this application provides a pore-forming agent for secondary battery including a one-dimensional conductive material and stable-state lithium metal particles, where the stable-state lithium metal particles are loaded on the one-dimensional conductive material.

In the pore-forming agent for secondary battery, the stable-state lithium metal particles are loaded on the one-dimensional conductive material, so that a conductive network can be formed covering the one-dimensional conductive material for preparation of negative electrode plate. When a battery is assembled and injected with an electrolyte, lithium metal in the pore-forming agent can be intercalated into a negative electrode active material to implement in-situ pore formation and pre-lithiation. As compared with conventional pore-forming means, the above pore-forming agent for secondary battery can implement in-situ non-destructive pore formation, and the pores obtained are relatively large and less likely to collapse or close, thus improving electrolyte infiltration of a negative electrode plate, reducing battery polarization, and facilitating preparation of negative electrode plate with higher energy density. In addition, because the lithium metal can be intercalated into the negative electrode active material for simultaneous pre-lithiation, the energy density of the negative electrode plate can be further improved.

In some embodiments, the stable-state lithium metal particles are lithium metal particles with a coating layer. Coated with the coating layer, the stable-state lithium metal particles have good chemical stability, and before electrolyte injection, the lithium metal is less prone to oxidation reactions, resulting in high usable capacity.

In some embodiments, a substance of the coating layer is selected from at least one of conductive polymers and lithium carbonate.

In some embodiments, $D_v50$ of the stable-state lithium metal particles is 3 $\mu$m-10 $\mu$m. $D_v50$ is a corresponding particle size when a volume distribution percentage reaches 50%. For example, $D_v50$ can be easily measured in accordance with a particle size distribution laser diffraction method in GB/T 19077-2016 by using a laser particle size analyzer, for example, a laser particle size analyzer of Mastersizer 2000E from Malvern Instruments Ltd. of UK. It should be noted that $D_v50$ of the stable-state lithium metal particles exceeding the above range can still implement the pore-forming effect of the pore-forming agent.

In some embodiments, the one-dimensional conductive material includes at least one of conductive carbon fiber and organic conductive fiber.

In some embodiments, the conductive carbon fiber includes at least one of carbon nanotubes and carbon fiber. Further, the carbon fiber may be vapor grown carbon fiber (VGCF for short).

In some embodiments, the organic conductive fiber is selected from fiber containing at least one of polyaniline, polythiophene, polypyrrole, and polyacetylene. Polymers such as polyaniline, polythiophene, polypyrrole, and polyacetylene all have good electrical conductivity, such that the organic conductive fiber also has good electrical conductivity.

The above one-dimensional conductive material has high conductivity and can form a conductive network in the negative electrode plate as an ingredient of the pore-forming agent, guaranteeing electrical conductivity of the negative electrode plate and avoiding deterioration in electrochemical performance of the negative electrode plate.

In some embodiments, mass ratio of the one-dimensional conductive material to the stable-state lithium metal particles is (3-10): 1. The mass ratio of the one-dimensional conductive material to the stable-state lithium metal particles is controlled within the above ranges so that the negative electrode plate or secondary battery including the above pore-forming agent has higher energy density and better cycling stability. Further, the mass ratio of the one-dimensional conductive material to the stable-state lithium metal particles is (4-9): 1. Further, the mass ratio of the one-dimensional conductive material to the stable-state lithium metal particles is (5-8): 1.

In some embodiments, in the pore-forming agent for secondary battery, the one-dimensional conductive material forms a conductive network structure. The one-dimensional conductive material forming a conductive network structure can guarantee electrical conductivity of the negative electrode plate using the above pore-forming agent and avoid deterioration in electrochemical performance of the negative electrode plate.

In some embodiments, the conductive network structure is a layer structure, a cage structure, or a woven structure.

In some embodiments, the pore-forming agent for secondary battery is spherical particles, the one-dimensional conductive material forms a cage conductive network structure, and the stable-state lithium metal particles are loaded on the cage conductive network structure formed by the one-dimensional conductive material.

In some embodiments, $D_v50$ of the pore-forming agent for secondary battery is 10 $\mu$m-250 $\mu$m. Optionally, $D_v50$ of the pore-forming agent for secondary battery may fall within a range defined by any two of the following values: 10 $\mu$m, 15 $\mu$m, 25 $\mu$m, 35 $\mu$m, 45 $\mu$m, 50 $\mu$m, 60 $\mu$m, 70 $\mu$m, 80 $\mu$m, 90 $\mu$m, 100 $\mu$m, 150 $\mu$m, 200 $\mu$m, or 250 $\mu$m. Further, $D_v50$ of the pore-forming agent for secondary battery is 20 $\mu$m-200 $\mu$m. Further, $D_v50$ of the pore-forming agent for secondary battery is 30 $\mu$m-80 $\mu$m.

Another embodiment of this application further provides a preparation method of pore-forming agent for secondary battery including the following step:
loading stable-state lithium metal particles on a one-dimensional conductive material to prepare a pore-forming agent for secondary battery.

The above preparation method of pore-forming agent for secondary battery features simple operation and low costs and facilitates easy implementation of mass production, and the prepared pore-forming agent for secondary battery is used for preparation of negative electrode plate so as to implement in-situ pore formation, improving electrolyte infiltration and lithium ion transport of the negative electrode plate, and used in secondary batteries to improve energy density, direct current impedance, and cycling stability of the secondary batteries.

In some embodiments, the step of loading stable-state lithium metal particles on a one-dimensional conductive material is performed through spray drying.

For example, the preparation method of pore-forming agent in an embodiment is specifically as follows: stirring and mixing the stable-state lithium metal particles and the one-dimensional conductive material, and then performing spray drying to prepare the pore-forming agent.

Another embodiment of this application further provides a negative electrode plate including a current collector and a negative electrode active substance layer, where the negative electrode active substance layer is disposed on at least one surface of the current collector; and the negative electrode active substance layer includes the foregoing pore-forming agent for secondary battery or the pore-forming agent for secondary battery prepared using the foregoing preparation method of pore-forming agent for secondary battery.

When a battery is assembled and injected with an electrolyte, lithium metal in the pore-forming agent can be intercalated into a negative electrode active material to implement in-situ pore formation and pre-lithiation. The above negative electrode plate can implement in-situ non-destructive pore formation, and the pores obtained are relatively large and less likely to collapse or close, thus improving electrolyte infiltration of the negative electrode plate, and reducing battery polarization, and the negative electrode plate has higher energy density and better cycling performance.

In some embodiments, mass percentage of the pore-forming agent for secondary battery in the negative electrode active substance layer is 0.1%-15%. The percentage of the pore-forming agent in the negative electrode active substance layer is controlled within the above ranges so that the negative electrode plate has more suitable porosity and the negative electrode plate has better electrolyte infiltration and lithium ion transport performance. Optionally, the mass percentage of the pore-forming agent for secondary battery in the negative electrode active substance layer may fall within a range defined by any two of the following values: 0.1%, 0.5%, 1.5%, 3%, 4%, 6%, 8%, 10%, 12%, 14%, or 15%. Further, the mass percentage of the pore-forming agent for secondary battery in the negative electrode active substance layer is 1%-10%. Further, the mass percentage of the pore-forming agent for secondary battery in the negative electrode active substance layer is 2%-5%.

Another embodiment of this application further provides an electrode assembly including:
a positive electrode plate, a separator, and the foregoing negative electrode plate that are stacked.

In some embodiments, the positive electrode plate, the negative electrode plate, and the separator may be made into the electrode assembly through winding or lamination.

In addition, the following describes the secondary battery, battery module, battery pack, and electric apparatus of this application with appropriate reference to the accompanying drawings.

An embodiment of this application provides a secondary battery.

Normally, the secondary battery includes a positive electrode plate, a negative electrode plate, an electrolyte, and a separator. In a charge and discharge process of the battery, active ions are intercalated and deintercalated between the positive electrode plate and the negative electrode plate. The electrolyte conducts ions between the positive electrode plate and the negative electrode plate. The separator is disposed between the positive electrode plate and the negative electrode plate to mainly prevent a short circuit between positive and negative electrodes and to allow the ions to pass through.

Negative electrode plate

The negative electrode plate includes a negative electrode current collector and a negative electrode active substance layer disposed on at least one surface of the negative electrode current collector, where the negative electrode active substance layer includes a negative electrode active material. The negative electrode active substance layer is disposed on at least one surface of the current collector; the negative electrode active substance layer includes a negative electrode active material and a one-dimensional conductive material, the negative electrode active material being intercalated with lithium; and the negative electrode active substance layer has a pore structure, at least part of the pore structure being formed by the one-dimensional conductive material. It can be understood that the secondary battery may be obtained by assembling the above electrode assembly and electrolyte. The negative electrode plate in the electrode assembly comes in contact with the electrolyte, so that lithium in the stable-state lithium metal particles in the negative electrode plate is intercalated into the negative electrode active material to implement pre-lithiation, and the pore-forming agent in the negative electrode plate forms pores in situ at positions of lithium deintercalated from the stable-state lithium metal particles, so as to form the above pore structure. Since the pore structure is formed through in-situ pore formation of lithium in the stable-state lithium metal particles by the pore-forming agent, at least part of the pore structure is formed by the one-dimensional conductive material.

For example, the negative electrode current collector includes two opposite surfaces in its thickness direction, and the negative electrode active substance layer is disposed on either or both of the two opposite surfaces of the negative electrode current collector.

In some embodiments, the negative electrode current collector may be a metal foil current collector or a composite current collector. For example, for the metal foil, a copper foil may be used. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a well-known negative electrode active material used for a battery in the art. For example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, this application is not limited to these materials but may use other conventional materials that can be used as negative electrode active materials for batteries instead. One of these negative electrode active materials may be used alone, or two or more of them may be used in combination.

In some embodiments, the negative electrode active substance layer further optionally includes a binder. The binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active substance layer further optionally includes a conductive agent. The conductive agent may be selected from at least one of superconducting carbon, acetylene black, carbon black, Ketjen black, carbon dots, carbon nanotubes, graphene, and carbon nanofiber.

In some embodiments, the negative electrode active substance layer further optionally includes other promoters such as a thickener (for example, sodium carboxymethyl cellulose (CMC-Na)).

In some embodiments, the negative electrode plate may be prepared in the following manner: the constituents used for preparing the negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

Positive electrode plate

The positive electrode plate includes a positive electrode current collector and a positive electrode active substance layer disposed on at least one surface of the positive electrode current collector, where the positive electrode active substance layer includes a positive electrode active material.

For example, the positive electrode current collector includes two opposite surfaces in its thickness direction, and the positive electrode active substance layer is disposed on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the positive electrode active material may be a well-known positive electrode active material used for a battery in the art. For example, the positive electrode active material may include at least one of the following materials: olivine-structured lithium-containing phosphate, lithium transition metal oxide, and respective modified compounds thereof. However, this application is not limited to such materials, and may alternatively use other conventional well-known materials that can be used as positive electrode active materials for batteries. One type of these positive electrode active materials may be used alone, or two or more of them may be used in combination. Examples of the lithium transition metal oxide may include but are not limited to at least one of lithium cobalt oxide (for example, $LiCoO_2$), lithium nickel oxide (for example, $LiNiO_2$), lithium manganese oxide (for example, $LiMnO_2$ and $LiMn_2O_4$), lithium nickel cobalt oxide, lithium manganese cobalt oxide, lithium nickel manganese oxide, lithium nickel cobalt manganese oxide (for example, $LiNi_{1/3}Co_{1/3}Mn_{1/3}O_2$ (NCM333 for short), $LiNi_{0.5}Co_{0.2}Mn_{0.3}O_2$ (NCM523 for short), $LiNi_{0.5}Co_{0.25}Mn_{0.25}O_2$ (NCM211 for short), $LiNi_{0.6}Co_{0.2}Mn_{0.2}O_2$ (NCM622 for short), and $LiNi_{0.8}Co_{0.1}Mn_{0.1}O_2$ (NCM811 for short)), lithium nickel cobalt aluminum oxide (for example, $LiNi_{0.85}Co_{0.15}Al_{0.05}O_2$), and modified compounds thereof. Examples of the olivine-structured lithium-containing phosphate may include but are not limited to at least one of lithium iron phosphate (for example, $LiFePO_4$ (LFP for short)), a composite material of lithium iron phosphate and carbon, lithium manganese phosphate (for example, $LiMnPO_4$), composite materials of lithium manganese phosphate and carbon, lithium manganese iron phosphate, and composite materials of lithium manganese iron phosphate and carbon.

In some embodiments, the positive electrode active substance layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode active substance layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following manner: the foregoing constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

Electrolyte

The electrolyte conducts ions between the positive electrode plate and the negative electrode plate. The electrolyte is not specifically limited to any particular type in this application and may be selected based on needs.

In some embodiments, the electrolyte includes an electrolytic salt and a solvent.

In some embodiments, the electrolytic salt may be selected from at least one of lithium hexafluorophosphate, lithium tetrafluoroborate, lithium perchlorate, lithium hexafluoroarsenate, lithium bis(fluorosulfonyl)imide, lithium bistrifluoromethanesulfonimide, lithium trifluoromethanesulfonate, lithium difluorophosphate, lithium difluoro(oxalato)borate, lithium dioxalate borate, lithium difluoro(dioxalato)phosphate, and lithium tetrafluoro oxalato phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, methyl ethyl sulfone, and diethyl sulfone.

In some embodiments, the electrolyte further optionally includes an additive. For example, the additive may include a negative electrode film-forming additive or a positive electrode film-forming additive or may include an additive capable of improving some performance of a battery, for example, an additive for improving overcharge performance of the battery, an additive for improving high-temperature performance or low-temperature performance of the battery.

Separator

In some embodiments, the secondary battery further includes a separator. The separator is not limited to any particular type in this application and may be any well-known porous separator with good chemical stability and mechanical stability.

In some embodiments, a material of the separator may be selected from at least one of glass fiber, non-woven fabric, polyethylene, polypropylene, and polyvinylidene fluoride. The separator may be a single-layer film or a multi-layer composite film and is not particularly limited. When the separator is a multi-layer composite film, all layers may be made of same or different materials, which is not particularly limited.

In some embodiments, the secondary battery may include an outer package. The outer package may be used for packaging the foregoing electrode assembly and electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic. As the plastic, polypropylene, polybutylene terephthalate, polybutylene succinate, and the like may be listed.

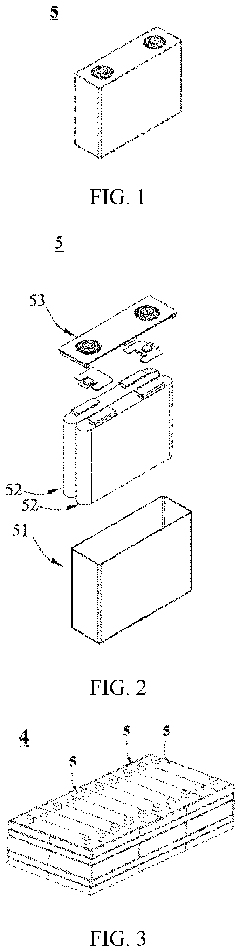

This application does not impose any special limitations on a shape of the secondary battery, and the secondary battery may be cylindrical, rectangular, or of any other shapes. For example, FIG. 1 shows a rectangular secondary battery 5 as an example.

In some embodiments, referring to FIG. 2, the outer package may include a housing 51 and a cover plate 53.

The housing 51 may include a base plate and a side plate connected to the base plate, and the base plate and the side plate enclose an accommodating cavity. The housing 51 has an opening communicating with the accommodating cavity, and the cover plate 53 can cover the opening to seal the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. One or more electrode assemblies 52 may be provided in the secondary battery 5, and persons skilled in the art may make choices based on actual needs.

In some embodiments, the secondary battery may be assembled into a battery module, and the battery module may include one or more secondary batteries. The specific quantity may be chosen by persons skilled in the art according to use and capacity of the battery module.

FIG. 3 shows a battery module 4 as an example. Referring to FIG. 3, in the battery module 4, a plurality of secondary batteries 5 may be sequentially arranged along a length direction of the battery module 4. Certainly, the batteries may alternatively be arranged in any other manners. Further, the plurality of secondary batteries 5 may be fixed by fasteners.

Optionally, the battery module 4 may further include a housing with an accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

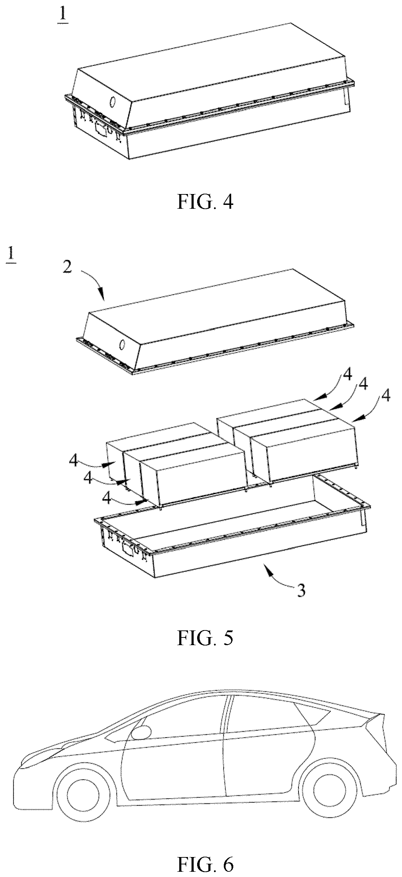

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can be engaged with the lower box body 3 to form an enclosed space for accommodating the battery modules 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, the battery module, or the battery pack may be selected for the electric apparatus based on requirements for using the electric apparatus.

FIG. 6 shows an electric apparatus as an example. This electric apparatus is a battery electric vehicle, a hybrid electric vehicle, a plug-in hybrid electric vehicle, or the like. To satisfy requirements of the electric apparatus for high power and high energy density of secondary batteries, a battery pack or a battery module may be used.

In another example, the apparatus may be a mobile phone, a tablet computer, a notebook computer, or the like. Such apparatus is generally required to be light and thin and may use a secondary battery as its power source.

Examples

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated. In the following examples and comparative examples, lithium metal particles coated with conductive polymer are lithium metal particles coated with PAN.

Example 1

The pore-forming agent for secondary battery in this example was prepared according to the following steps: The lithium metal particles and PAN were mixed at a mass ratio of 8:2 and subjected to ultrasound for 30 min, where PAN forms a uniform coating layer on the surface of the lithium metal to obtain lithium metal particles coated with PAN. VGCF and the lithium metal particles coated with PAN were mixed at a mass ratio of 9:1 in anhydrous ethanol/tetrahydrofuran (THF) and subjected to mechanical stirring for 2 h; the composite material was subjected to ultrasound for 2 h, followed by spray drying with a gas flow rate of 500 mL/h to obtain a pore-forming agent; and VGCF in the pore-forming agent formed a cage conductive network structure, where the lithium metal particles coated with PAN were loaded on the cage conductive network structure formed by VGCF.

Examples 2 to 16

Examples 2 to 16 differ from example 1 in the type of the one-dimensional conductive material or stable-state lithium metal particles. For details, refer to Table 1.

Comparative example 1

The pore-forming agent for secondary battery in this comparative example was prepared according to the following step:

The lithium metal particles coated with PAN prepared in example 1 and graphite were mixed and ground at the mass ratio shown in Table 1 to prepare the pore-forming agent in this comparative example, where graphite formed a coating layer on the surface of the lithium metal particles coated with PAN.

Compositions and particle sizes of the pore-forming agents for secondary battery in examples 1 to 6 and comparative example 1 are recorded in Table 1.

**Table 1 Compositions and particle sizes of pore-forming agents for secondary battery in examples 1 to 6 and comparative example 1**

| Example | One-dimensional conductive material | | Stable-state lithium metal particles | | $D_v50$ ($\mu$m) |
|---|---|---|---|---|---|
| | Type | Mass (g) | Type | Mass (g) | |
| | | | | | |
| Example 1 | VGCF | 6 | Lithium metal particles coated with PAN | 1 | 50 |
| Example 2 | Carbon nanotubes | 6 | Lithium metal particles coated with PAN | 1 | 50 |
| Example 3 | VGCF | 6 | Lithium metal particles coated with lithium carbonate | 1 | 50 |
| Example 4 | Carbon nanotubes | 6 | Lithium metal particles coated with lithium carbonate | 1 | 50 |
| Example 5 | Polyaniline | 6 | Lithium metal particles coated with PAN | 1 | 50 |
| Example 6 | Polyaniline | 6 | Lithium metal particles coated with lithium carbonate | 1 | 50 |
| Comparative example 1 | Graphite | 6 | Lithium metal particles coated with PAN | 1 | 50 |

Examples 7 to 13

Examples 7 to 13 differ from example 1 in the amount of the one-dimensional conductive material.

Comparative example 2

The pore-forming agent in comparative example 2 was the lithium metal particles coated with PAN prepared in example 1.

Comparative example 3

The pore-forming agent in comparative example 3 differs from that in example 1 in the absence of lithium metal particles coated with PAN.

Compositions and particle sizes of the pore-forming agents for secondary battery in example 1, examples 7 to 13, and comparative examples 2 and 3 are recorded in Table 2.

**Table 2 Compositions and particle sizes of pore-forming agents for secondary battery in example 1, examples 7 to 13, and comparative examples 2 and 3**

| Example | One-dimensional conductive material | | Stable-state lithium metal particles | | $D_v50$ (μm) |
|---|---|---|---|---|---|
| | Type | Mass (g) | Type | Mass (g) | |
| Example 7 | VGCF | 3 | Lithium metal particles coated with PAN | 1 | 10 |
| Example 8 | VGCF | 4 | Lithium metal particles coated with PAN | 1 | 50 |
| Example 9 | VGCF | 5 | Lithium metal particles coated with PAN | 1 | 40 |
| Example 1 | VGCF | 6 | Lithium metal particles coated with PAN | 1 | 80 |
| Example 10 | VGCF | 7 | Lithium metal particles coated with PAN | 1 | 120 |
| Example 11 | VGCF | 8 | Lithium metal particles coated with PAN | 1 | 150 |
| Example 12 | VGCF | 9 | Lithium metal particles coated with PAN | 1 | 180 |
| Example 13 | VGCF | 10 | Lithium metal particles coated with PAN | 1 | 200 |
| Comparative example 2 | / | / | Lithium metal particles coated with PAN | 1 | 5 |
| Comparative example 3 | VGCF | 1 | / | / | 5 |

Examples 14 to 21

Examples 14 to 21 differ from example 1 in the particle size of the pore-forming agent. Compositions and particle sizes of the pore-forming agents for secondary battery in examples 14 to 21 are recorded in Table 3.

**Table 3 Compositions and particle sizes of pore-forming agents for secondary battery in example 1 and examples 14 to 21**

| Example | One-dimensional conductive material | | Stable-state lithium metal particles | | $D_v50$ (μm) |
|---|---|---|---|---|---|
| | Type | Mass (g) | Type | Mass (g) | |
| Example 14 | VGCF | 6 | Lithium metal particles coated with PAN | 1 | 10 |

(continued)

| Example | One-dimensional conductive material | | Stable-state lithium metal particles | | $D_v50$ ($\mu$m) |
| --- | --- | --- | --- | --- | --- |
| | Type | Mass (g) | Type | Mass (g) | |
| Example 15 | VGCF | 6 | Lithium metal particles coated with PAN | 1 | 20 |
| Example 1 | VGCF | 6 | Lithium metal particles coated with PAN | 1 | 50 |
| Example 16 | VGCF | 6 | Lithium metal particles coated with PAN | 1 | 60 |
| Example 17 | VGCF | 6 | Lithium metal particles coated with PAN | 1 | 80 |
| Example 18 | VGCF | 6 | Lithium metal particles coated with PAN | 1 | 120 |
| Example 19 | VGCF | 6 | Lithium metal particles coated with PAN | 1 | 150 |
| Example 20 | VGCF | 6 | Lithium metal particles coated with PAN | 1 | 200 |
| Example 21 | VGCF | 6 | Lithium metal particles coated with PAN | 1 | 250 |

Comparative example 4

The negative electrode plate in this comparative example was prepared using a laser pore-forming method: Silicon monoxide, CMC, SBR, conductive carbon black, and single-walled carbon nanotubes were added into deionized water and were stirred to a uniform slurry, where a mass ratio of silicon monoxide, CMC, SBR, conductive carbon black, and single-walled carbon nanotubes was 95.8:0.5:0.5:1.04:2.16. The slurry with a thickness of 125 $\mu$m was applied onto a copper foil with a thickness of 4.5 $\mu$m, followed by drying to prepare a negative electrode plate with a thickness of 110 $\mu$m.

The negative electrode plate was rolled into a coil and then put into a laser punching apparatus for laser pore formation, where the laser speed was set to 0.001 m/mim, and the laser frequency was set to 50 W; and then a negative electrode plate with pores formed was obtained.

The pore-forming method in comparative example 4 features excessively slow speed and excessively low efficiency for mass production. In addition, this pore-forming method scatters dust on the surface of the electrode plate, leading to a high K value (a ratio of voltage drop to time), while loss in the material of the negative electrode active substance layer causes damage to the conductive network structure.

Preparation of pouch battery

(1) Preparation of positive electrode plate: $LiNi_{0.96}Co_{0.02}Mn_{0.02}O_2$, polyvinylidene fluoride (PVDF), and conductive carbon were added into a specified amount of N-methylpyrrolidone (NMP) and stirred in a drying room to a uniform slurry with a viscosity controlled to 3000 mPas-10000 mPas, where a mass ratio of $LiNi_{0.96}Co_{0.02}Mn_{0.02}O_2$, the binder, and the conductive agent was 90:5:5. The slurry with a thickness of 500 $\mu$m was applied onto an aluminum foil with a thickness of 10 $\mu$m, followed by drying to prepare a positive electrode plate with a thickness of 400 $\mu$m.
(2) Preparation of negative electrode plate: Silicon monoxide, CMC, SBR, conductive carbon black, single-walled carbon nanotubes, and the pore-forming agent for secondary battery were added into deionized water and stirred to a uniform slurry, where a mass ratio of silicon monoxide, CMC, SBR, conductive carbon black, single-walled carbon nanotubes, and the pore-forming agent for secondary battery was 95.8:0.5:0.5:1.04:0.06:2.1. The slurry with a thickness of 125 $\mu$m was applied onto a copper foil with a thickness of 4.5 $\mu$m, followed by drying to prepare a negative electrode plate with a thickness of 110 $\mu$m.
(3) Preparation of pouch battery: The prepared positive electrode plate and negative electrode plate, a separator (a Celgard PE base film of 7 $\mu$m coated with ceramic coating of 2 $\mu$m in thickness on both sides), and an electrolyte (8950FB from Guotai Huarong New Chemical Materials Co., Ltd.) were assembled to a pouch battery. After standing, formation, aging, degassing, second sealing, and capacity test, a prepared pouch battery was obtained.

Examples 22 to 26

The negative electrode plates in examples 22 to 26 differ from the negative electrode plate in example 1 in the mass ratio of the negative electrode active material, conductive agent, and pore-forming agent for secondary battery in the negative electrode plate. Proportions of the negative electrode plate compositions in example 1 and examples 22 to 26 are recorded in Table 4.

**Table 4 Amounts of negative electrode active material, conductive agent, and pore-forming agent for secondary battery in negative electrode plates in example 1 and examples 22 to 26**

| Mass (g) | Silicon monoxide | Conductive carbon black | Single-walled carbon nanotubes | Pore-forming agent |
|---|---|---|---|---|
| Example 22 | 98.8 | 1.04 | 0.06 | 0.1 |
| Example 23 | 97.9 | 1.04 | 0.06 | 1 |
| Example 1 | 96.8 | 1.04 | 0.06 | 2.1 |
| Example 24 | 93.9 | 1.04 | 0.06 | 5 |
| Example 25 | 88.9 | 1.04 | 0.06 | 10 |
| Example 26 | 83.9 | 1.04 | 0.06 | 15 |

Tests

The following tests were performed on the pouch batteries prepared in the examples and comparative examples. The test results are recorded in Table 5 and Table 6.

Test for electrolyte infiltration

The battery was injected with an electrolyte, left standing at room temperature for 8 h, and then left standing at a high temperature of 45 degrees Celsius for 6 h, 8 h, 12 h, and 16 h. Then, formation was performed, and DCR and OCV voltage drops were checked.

Energy density test

The battery was charged to 4.25 V at 0.1C at room temperature according to standard, constant-voltage charged to 0.02C at 4.25 V, left standing for 10 min and then discharged to 2.5 V at 0.1C. The discharge capacity of the battery was recorded and then the energy density during discharge was calculated.

$$\text{Energy density (Wh/kg)} = \text{discharge capacity (Wh)/mass of secondary battery (kg)}$$

Cycling performance test

At 25°C, the pouch battery was charged to 4.25 V at a rate of 0.33C, then constant-voltage charged until the current was below 0.05C, and then discharged to 2.5 V at a rate of 1C. Such full charge and full discharge cycling test was performed until the discharge capacity of the pouch battery decayed to 80% of the initial capacity, and the number of cycles at this time point was recorded.

Rate performance test

The capacity test for the pouch laminated batteries was carried out, and the process was as follows: The battery was left standing for 5 min, discharged to 2.5 V at 0.33C, left standing for 5 min, constant-current charged to 4.3 V at 0.33C, and then turned to constant-voltage charging. When the charging current decreased to 0.05C, the constant-voltage charging ended, the battery was left standing for 5 min, and then discharged to 2.5 V at 0.33C. The discharge capacity at this time point was recorded as C0.

The process of the rate performance test was as follows: The battery was left standing for 5 min, discharged to 2.5 V at 0.33C, left standing for 5 min, constant-current charged to 4.3 V at 0.33C, and then turned to constant-voltage charging. When the charging current decreased to 0.05C, the constant-voltage charging ended, the battery was left standing for 5 min, and then discharged to 2.5 V at 1C. The discharge capacity at this time point was recorded. For different rate tests, 1C in the last step of "discharged to 2.5 V at 1C" was replaced with a corresponding rate of 2C/3C. The capacity value obtained in the rate performance test was divided by the mass of the (composite) positive electrode material contained in the pouch laminated batteries to obtain the gram capacity of the positive electrode material at a different rate. The capacity retention rates of the laminated batteries discharged at different rates were calculated with C0 as a nominal capacity.

High- and low-temperature performance tests

(1) Discharge capacity test at room temperature

The battery was constant-current charged at a rate of 0.33C at room temperature until the voltage was higher than 4.25 V, and then further constant-voltage charged at 4.25 V until the current was lower than 0.05C, such that the battery was in a full charge state of 4.25 V After this, the pouch battery was constant-current discharged at a rate of 0.33C until the voltage reached 2.5 V (cut-off voltage), and the discharge capacity $D_0$ was recorded.

(2) High-temperature cycling test

The pouch battery was put in a high and low temperature box of 45°C. When the temperature was stable, the battery was constant-current charged at a rate of 0.33C at room temperature until the voltage was higher than 4.25 V, and then further constant-voltage charged at 4.25 V until the current was lower than 0.05C, such that the battery was in a full charge state of 4.25 V After this, the pouch battery was constant-current discharged at a rate of 0.33C until the voltage reached 2.5 V (cut-off voltage). This was one cycle. The cycle was repeated for 30 times and the discharge capacity $D_1$ in the last cycle was recorded.

$$\text{Capacity retention rate in high-temperature cycle (\%)} = D_1/D_0 \times 100\%.$$

(3) Low-temperature cycling test

The pouch battery was put in a high and low temperature box of 0°C. When the temperature was stable, the battery was constant-current charged at a rate of 0.33C at room temperature until the voltage was higher than 4.35 V, and then further constant-voltage charged at 4.35 V until the current was lower than 0.05C, such that the battery was in a full charge state of 4.35 V After this, the pouch battery was constant-current discharged at a rate of 1C until the voltage reached 2.5 V (cut-off voltage). This was one cycle. The cycle was repeated for 30 times and the discharge capacity $D_2$ in the last cycle was recorded.

$$\text{Capacity retention rate in cycle at low temperature of } 0°C \text{ (\%)} = D_2/D_0 \times 100\%.$$

The pouch battery was put in a high and low temperature box of -20°C. When the temperature was stable, the battery was constant-current charged at a rate of 0.33C at room temperature until the voltage was higher than 4.35 V, and then further constant-voltage charged at 4.35 V until the current was lower than 0.05C, such that the battery was in a full charge state of 4.35 V After this, the pouch battery was constant-current discharged at a rate of 1C until the voltage reached 2.5 V (cut-off voltage). This was one cycle. The cycle was repeated for 30 times and the discharge capacity $D_3$ in the last cycle was recorded.

$$\text{Capacity retention rate in cycle at low temperature of } -20°C \text{ (\%)} = D_3/D_0 \times 100\%.$$

## Table 5 Electrolyte infiltration, energy density, and cycling performance of pouch batteries in examples 1 to 26 and comparative examples 1 to 4

| Example | Electrolyte infiltration | Energy density (Wh/kg) | Cycles | Example | Electrolyte infiltration | Energy density (Wh/kg) | Cycles |
|---|---|---|---|---|---|---|---|
| Example 1 | Excellent | 408 | 1000 | Example 16 | Good | 399 | 700 |
| Example 2 | Good | 399 | 680 | Example 17 | Good | 398 | 730 |
| Example 3 | Good | 399 | 600 | Example 18 | Good | 398 | 760 |
| Example 4 | Good | 398 | 550 | Example 19 | Good | 396 | 800 |
| Example 5 | Good | 397 | 520 | Example 20 | Good | 400 | 840 |
| Example 6 | Good | 397 | 480 | Example 21 | Good | 402 | 880 |
| Example 7 | Average | 395 | 460 | Example 22 | Good | 399 | 920 |
| Example 8 | Good | 402 | 923 | Example 23 | Good | 400 | 950 |
| Example 9 | Excellent | 407 | 1006 | Example 24 | Good | 399 | 900 |
| Example 10 | Excellent | 409 | 1060 | Example 25 | Good | 399 | 880 |
| Example 11 | Excellent | 408 | 1000 | Example 26 | Good | 399 | 860 |
| Example 12 | Excellent | 402 | 900 | Comparative example 1 | Poor | 399 | 500 |
| Example 13 | Average | 398 | 480 | Comparative example 2 | Poor | 388 | 388 |
| Example 14 | Good | 400 | 540 | Comparative example 3 | Poor | 390 | 400 |
| Example 15 | Good | 400 | 620 | Comparative example 4 | Good | 388 | 350 |

It can be seen from the relevant data in Table 5 that the pouch batteries in examples 1 to 26 have better electrolyte infiltration, the battery energy density is 395 Wh/kg-409 Wh/kg, and the number of cycles is 460-1060. Especially in example 1, the pore-forming agent prepared using the lithium metal particles coated with VGCF and PAN has a better pore-forming effect than the pore-forming agent formed using other types of raw materials. The energy density reaches 409 Wh/kg, the number of cycles reaches 1000, and the pouch battery features both higher energy density and longer cycle life.

In comparative example 1, the pore-forming agent formed by the lithium metal particles coated with PAN that are coated with graphite has a poor pore-forming effect, and the formed pores are not conducive to electrolyte infiltration due to coating of graphite such that the pouch battery features poor electrolyte infiltration. The pouch battery in comparative example 1 has energy density of 399 Wh/kg and number of cycles of 500. Examples 1 to 6 exhibit a better pore-forming effect compared with comparative example 1, especially the cycle life is significantly improved. In contrast, comparative examples 2 and 3 in which the lithium metal particles simply coated with PAN or VGCF respectively as the pore-forming agent feature poor electrolyte infiltration. The electrode plate in comparative example 4 is prepared through laser pore formation and thus features a better pore-forming effect. However, comparative example 4 exhibits a low energy density of 388 Wh/kg due to loss of some active materials caused by laser pore formation.

It can be seen from examples 7 to 13 that the mass ratio of the one-dimensional conductive material to the stable-state lithium metal particles is (5-8): 1, the pore-forming effect of the pore-forming agent is better, and the pouch battery features excellent electrolyte infiltration as well as higher energy density and longer cycle life.

It can be seen from examples 14 to 21 that when $D_v50$ falls within the range of 10 $\mu$m-250 $\mu$m, the cycle life of the pouch battery increases as $D_v50$ of the pore-forming agent increases.

**Table 6 Rate performance and high- and low-temperature performance of pouch batteries in examples 1 to 13 and comparative examples 1 and 3**

| Example | Rate performance (%) | | | | High- and low-temperature performance (%) | | | |
|---|---|---|---|---|---|---|---|---|
| | 0.5C | 1C | 2C | 3C | 45°C | 25°C | 0°C | -20°C |
| Example 1 | 98.9 | 92.2 | 80.2 | 60.3 | 101 | 100 | 96 | 86 |
| Example 2 | 98.2 | 92.1 | 80.1 | 59.3 | 100.3 | 100 | 92.3 | 83.8 |
| Example 3 | 98.3 | 92.2 | 80.2 | 59.3 | 100.3 | 100 | 92.3 | 83.8 |
| Example 4 | 98.3 | 92.3 | 80.1 | 59.2 | 100.3 | 100 | 92.3 | 83.8 |
| Example 5 | 98.4 | 92.2 | 80.2 | 58.3 | 100.3 | 100 | 92.3 | 83.8 |
| Example 6 | 98.3 | 92.1 | 80.2 | 59.3 | 100.3 | 100 | 92.3 | 83.8 |
| Example 7 | 97.8 | 89.8 | 62.8 | 40,6 | 100.5 | 100 | 91 | 60 |
| Example 8 | 98.2 | 90.8 | 76.8 | 56.2 | 100.8 | 100 | 94 | 80 |
| Example 9 | 98.8 | 93 | 80.8 | 61.2 | 101 | 100 | 96 | 86 |
| Example 10 | 98.9 | 93 | 80.8 | 61.1 | 101 | 100 | 96 | 86 |
| Example 11 | 98.7 | 93 | 80.8 | 61.0 | 101 | 100 | 96 | 86 |
| Example 12 | 98.2 | 90.8 | 76.8 | 56.2 | 100.8 | 100 | 94 | 80 |
| Example 13 | 97.8 | 89.8 | 62.8 | 40,6 | 100.2 | 100 | 88 | 40 |
| Comparative example 1 | 98.4 | 92.2 | 80.2 | 58.3 | 100.3 | 100 | 92.3 | 83.8 |
| Comparative example 2 | 90.8 | 69.8 | 42.8 | 20.6 | 100.2 | 100 | 88 | 40 |

It can be seen from the relevant data in Table 6 that the pouch batteries in examples 1 to 13 all have relatively high rate performance and high- and low-temperature performance. This is because the pore-forming agent has a better pore-forming effect, facilitating capacity performance of the pouch battery.

Technical features in the foregoing embodiments may be combined in any way. For brevity of description, possible combinations of the technical features in the foregoing embodiments are not described all. However, as long as there is no contradiction among combinations of these technical features, all the combinations should be considered within a range recorded in this specification.

The foregoing embodiments only represent several implementations of this application, and descriptions thereof are specific and detailed, but should not be construed as a limitation on the scope of this patent. It should be noted that persons of ordinary skill in the art may further make several modifications and improvements without departing from the concept of this application, and these modifications and improvements also fall within the protection scope of this application. Therefore, the protection scope of this application should be subject to the appended claims.

**Claims**

1. A pore-forming agent for secondary battery, comprising a one-dimensional conductive material and stable-state lithium metal particles, wherein the stable-state lithium metal particles are loaded on the one-dimensional conductive material.

**2.** The pore-forming agent for secondary battery according to claim 1, wherein the stable-state lithium metal particles are lithium metal particles with a coating layer; and
optionally, a substance of the coating layer is selected from at least one of conductive polymers and lithium carbonate.

**3.** The pore-forming agent for secondary battery according to claim 1 or 2, wherein the one-dimensional conductive material comprises at least one of conductive carbon fiber and organic conductive fiber.

**4.** The pore-forming agent for secondary battery according to claim 3, wherein the conductive carbon fiber comprises at least one of carbon nanotubes and carbon fiber.

**5.** The pore-forming agent for secondary battery according to claim 3, wherein the organic conductive fiber is selected from fiber containing at least one of polyaniline, polythiophene, polypyrrole, and polyacetylene.

**6.** The pore-forming agent for secondary battery according to any one of claims 1 to 5, wherein mass ratio of the one-dimensional conductive material to the stable-state lithium metal particles is (3-10): 1;

optionally, the mass ratio of the one-dimensional conductive material to the stable-state lithium metal particles is (4-9): 1; and
optionally, the mass ratio of the one-dimensional conductive material to the stable-state lithium metal particles is (5-8): 1.

**7.** The pore-forming agent for secondary battery according to any one of claims 1 to 6, wherein in the pore-forming agent for secondary battery, the one-dimensional conductive material forms a conductive network structure;

optionally, the conductive network structure is a layer structure, a cage structure, or a woven structure; and
optionally, the conductive network structure is a cage structure.

**8.** The pore-forming agent for secondary battery according to any one of claims 1 to 7, wherein $D_v50$ of the pore-forming agent for secondary battery is 10 $\mu$m-250 $\mu$m;
optionally, $D_v50$ of the pore-forming agent for secondary battery is 20 $\mu$m-200 $\mu$m; and optionally, $D_v50$ of the pore-forming agent for secondary battery is 30 $\mu$m-80 $\mu$m.

**9.** A preparation method of pore-forming agent for secondary battery, comprising the following step:
loading stable-state lithium metal particles on a one-dimensional conductive material to prepare a pore-forming agent for secondary battery.

**10.** The preparation method of pore-forming agent for secondary battery according to claim 9, wherein the step of loading stable-state lithium metal particles on a one-dimensional conductive material is performed through spray drying.

**11.** A negative electrode plate, comprising a current collector and a negative electrode active substance layer, wherein the negative electrode active substance layer is disposed on at least one surface of the current collector; and the negative electrode active substance layer comprises the pore-forming agent for secondary battery according to any one of claims 1 to 8 or the pore-forming agent for secondary battery prepared using the preparation method of pore-forming agent for secondary battery according to claim 9 or 10.

**12.** The negative electrode plate according to claim 11, wherein mass percentage of the pore-forming agent for secondary battery in the negative electrode active substance layer is 0.1%-15%;

optionally, the mass percentage of the pore-forming agent for secondary battery in the negative electrode active substance layer is 1%-10%; and
optionally, the mass percentage of the pore-forming agent for secondary battery in the negative electrode active substance layer is 2%-5%.

**13.** An electrode assembly, comprising:
a positive electrode plate, a separator, and the negative electrode plate according to claim 11 or 12 that are stacked.

**14.** A secondary battery, comprising a positive electrode plate, an electrolyte, and a negative electrode plate that are stacked, the electrolyte being disposed between the positive electrode plate and the negative electrode plate; wherein

the negative electrode plate comprises a current collector and a negative electrode active substance layer, wherein the negative electrode active substance layer is disposed on at least one surface of the current collector; the negative electrode active substance layer comprises a negative electrode active material and a one-dimensional conductive material, the negative electrode active material being intercalated with lithium; and the negative electrode active substance layer has a pore structure, at least part of the pore structure being formed by the one-dimensional conductive material.

15. A battery module, comprising the secondary battery according to claim 14.

16. A battery pack, comprising the battery module according to claim 15.

17. An electric apparatus, comprising at least one of the secondary battery according to claim 14, the battery module according to claim 15, and the battery pack according to claim 16.

5

FIG. 1

5

FIG. 2

FIG. 3

FIG. 4

FIG. 5

FIG. 6

## INTERNATIONAL SEARCH REPORT

| | International application No. |
|---|---|
| | **PCT/CN2022/092598** |

### A. CLASSIFICATION OF SUBJECT MATTER

H01M4/62(2006.01)i;H01M10/0525(2010.01)i

According to International Patent Classification (IPC) or to both national classification and IPC

### B. FIELDS SEARCHED

Minimum documentation searched (classification system followed by classification symbols)

IPC: H01M4/-; H01M10/-

Documentation searched other than minimum documentation to the extent that such documents are included in the fields searched

Electronic data base consulted during the international search (name of data base and, where practicable, search terms used)

CNABS, CNTXT, ENTXT, ENTXTC, VEN, WPABSC: 包, 包覆, 多孔, 负极, 骨架, 裹, 金属, 金属锂, 聚合物, 框架, 碳, 碳酸锂, 纤维, 有机, 造孔, 锂, 锂金属, battery, carbonic, cell, fibre, hole, Li, Lithium, metal, negative, organic, polymer, porous, spac+, coat+, cover+, frame+, carb+

### C. DOCUMENTS CONSIDERED TO BE RELEVANT

| Category* | Citation of document, with indication, where appropriate, of the relevant passages | Relevant to claim No. |
|---|---|---|
| X | CN 113871575 A (EVERGRANDE NEW ENERGY TECHNOLOGY (SHENZHEN) CO., LTD.) 31 December 2021 (2021-12-31)<br>description, paragraphs 43-70, and figures 1-3 | 1-17 |
| X | CN 114171716 A (NATIONAL UNIVERSITY OF DEFENSE TECHNOLOGY OF PLA) 11 March 2022 (2022-03-11)<br>description, paragraphs 5 -35, and figures 1-4 | 1-17 |
| X | WO 2021212392 A1 (CONTEMPORARY AMPEREX TECHNOLOGY CO., LTD.) 28 October 2021 (2021-10-28)<br>description, paragraphs 20 -56, and figures 1-2 | 1-17 |
| A | JP 2001313025 A (MITSUBISHI ELECTRIC CORP.) 09 November 2001 (2001-11-09)<br>entire document | 1-17 |
| A | CN 107665977 A (A123 SYSTEMS LLC et al.) 06 February 2018 (2018-02-06)<br>entire document | 1-17 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 February 2023** | **09 February 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| CN | 113871575 | A | 31 December 2021 | None | | | |
| CN | 114171716 | A | 11 March 2022 | None | | | |
| WO | 2021212392 | A1 | 28 October 2021 | EP | 3930058 | A1 | 29 December 2021 |
| | | | | EP | 3930058 | A4 | 18 May 2022 |
| | | | | US | 2022149353 | A1 | 12 May 2022 |
| | | | | CN | 112771693 | A | 07 May 2021 |
| JP | 2001313025 | A | 09 November 2001 | None | | | |
| CN | 107665977 | A | 06 February 2018 | None | | | |

Form PCT/ISA/210 (patent family annex) (July 2022)